Europäisches Patentamt

European Patent Office

Office européen des brevets

(19)

(11) Veröffentlichungsnummer: **0 245 733 B1**

# EUROPÄISCHE PATENTSCHRIFT

(12)

(45) Veröffentlichungstag der Patentschrift: **26.02.92**

(51) Int. Cl.⁵: **B60N 2/02**

(21) Anmeldenummer: **87106397.0**

(22) Anmeldetag: **02.05.87**

(54) **Vorrichtung zur lösbaren Lagerung schwenkbarer Armlehnen von Sitzen, insbesondere Mittelarmlehnen von Kraftfahrzeug-Hintersitzen.**

(30) Priorität: **06.05.86 DE 3615261**

(43) Veröffentlichungstag der Anmeldung:
**19.11.87 Patentblatt  87/47**

(45) Bekanntmachung des Hinweises auf die
Patenterteilung:
**26.02.92 Patentblatt  92/09**

(84) Benannte Vertragsstaaten:
**DE FR GB IT SE**

(56) Entgegenhaltungen:
**EP-A- 0 063 969**
**DE-A- 3 036 302**
**DE-A- 3 322 511**

(73) Patentinhaber: **Adam Opel Aktiengesellschaft**
**Bahnhofsplatz 1 Postfach 17 10**
**W-6090 Rüsselsheim(DE)**

(72) Erfinder: **Schrom, Ralf-H., Dipl.-Ing. (FH)**
**Dolomitenstrasse 1**
**W-6090 Rüsselsheim(DE)**
Erfinder: **Trutter, Walter P.**
**Irenenstrasse 21**
**W-6200 Wiesbaden(DE)**

(74) Vertreter: **Bergerin, Ralf, Dipl.-Ing. et al**
**Adam Opel Aktiengesellschaft Bahnhofs-**
**platz 1 Postfach 17 10**
**W-6090 Rüsselsheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zur lösbaren Lagerung schwenkbarer Armlehnen von Sitzen, insbesondere Mittelarmlehnen von Kraftfahrzeug-Hintersitzen, wobei an der Armlehne Drehachsen befestigt sind, die beidseitig in ein an der Rückenlehne des Sitzes angeordnetes Lager eingreifen.

Bekannte Vorrichtungen zur lösbaren Lagerungen für Mittelarmlehnen von Kraftfahrzeug-Hintersitzen bestehen zumeist aus genieteten oder geschraubten Scharnieren. Bei einer bekannten lösbaren Lagerung (Audi) ist die mit einem Kopf versehene Drehachse in einer Lagermulde angeordnet, die durch einen federbelasteten Haken geschlossen wird. Durch die DE-OS 33 22 511 ist eine weitere lösbare Lagerung der Mittelarmlehne eines Kraftfahrzeug-Hintersitzes bekannt geworden, bei der seitlich an der Mittelarmlehne Führungsstücke befestigt sind, die mit kulissenartig ausgesparten Halteteilen in der Rückenlehne zusammenwirken.

Die bekannten Mittelarmlehnenlagerungen sind durch konstruktive Kompliziertheit und hohen Montageaufwand geprägt. Aufgabe der vorliegenden Erfindung ist es, eine Lagervorrichtung der eingangs bezeichneten Art zu schaffen, die einfacher und kostengünstiger herstellbar und montierbar ist als die bekannten Lagervorrichtungen.

Gemäß der Erfindung wird die Aufgabe dadurch gelöst, daß das Lager geteilt ausgebildet ist, derart, daß es ein an der Rückenlehne befestigtes metallisches Tragteil mit zwei beidseitig der Armlehne angeordneten Lagerarmen besitzt, die schlitzförmige, einseitig offene Lagerausnehmungen aufweisen und ein erstes Lagerteil bilden, und daß die schlitzförmigen Lagerausnehmungen jeweils durch auf die Lagerarme aufschiebbare Kunststoffkappen schließbar sind, welche ein zweites Lagerteil bilden, und daß die Kunststoffkappen zugleich als Blenden zur Verkleidung der Lagerstellen dienen.

Durch die Erfindung werden die Vorteile einer einfachen Montage der Mittelarmlehne, einer spielfreien Lagerung derselben und geringer Teilekosten erzielt. Ferner macht die erfindungsgemäße Lagervorrichtung zusätzliche Maßnahmen zur Verkleidung der Lagerstellen entbehrlich. Ein wesentlicher Vorteil der Erfindung liegt darüber hinaus darin, daß die Mittelarmlehne noch nach Montage der Hintersitz-Rückenlehne im Fahrzeug montiert werden kann.

Weitere Einzelheiten und Vorteile der Erfindung können den Unteransprüchen sowie - anhand eines Ausführungsbeispiels -der Zeichnung und der nachstehenden Beschreibung entnommen werden. Es zeigt:

Fig. 1    - in perspektivischer Explosionsdarstellung -einen Hintersitz eines Personenkraftwagens,

Fig. 2    die Lagerung einer aus Fig. 1 ersichtlichen Mittelarmlehne, in Seitenansicht,

Fig. 3    ein als Kunststoffkappe ausgebildetes Lagerteil für die Mittelarmlehne nach Fig. 1 und 2, in Seitenansicht (Blick auf die Innenseite),

Fig. 4    die Einzelheit "A" aus Fig. 3 in vergrößerter Darstellung,

Fig. 5    einen Schnitt längs der Linie V-V in Fig. 3, und

Fig. 6    einen Schnitt längs der Linie VI-VI in Fig. 3.

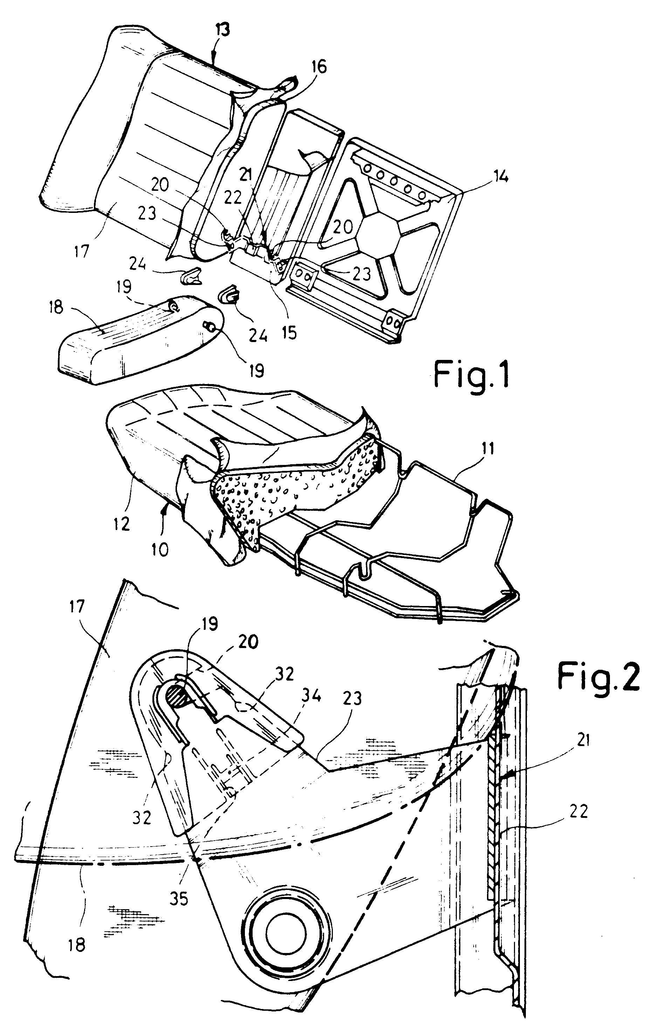

In Fig. 1 bezeichnet 10 das Sitzteil eines Kraftfahrzeug- Hintersitzes, welches aus einem Sitzrahmen 11 und einem darauf angeordneten (teilweise aufgeschnitten dargestellten) Sitzpolster 12 besteht. Mit 13 ist insgesamt die Rückenlehne des Fahrzeugsitzes 10 bezeichnet. Sie weist drei tragende Blechteile 14, 15 und 16 auf, die - einzeln oder gemeinsam nach vorn verschwenkbar - an der (nicht gezeigten) Karosserie befestigt sind. Auf den beiden äußeren Blechteilen 14 und 16 ist jeweils ein Rückenlehnenpolster angeordnet, von denen in Fig. 1 eines gezeigt und mit 17 beziffert ist. Es handelt sich also um eine Hintersitz-Rückenlehne mit einzeln nach vorn verschwenkbaren Rückenlehnenteilen. In Fig. 1 ist die Rückenlehne 13 allerdings in zurückgeklappter Stellung gezeigt. Wie weiterhin aus Fig. 1 hervorgeht, ist im Bereich des mittleren Rückenlehnen-Tragteils 15 eine Mittelarmlehne 18 schwenkbar angeordnet. Hierzu dienen Drehachsen 19, die bei 20 in ein insgesamt mit 21 bezeichnetes Lager eingreifen, welches an dem mittleren Blechteil 15 der Hintersitz-Rückenlehne 13 befestigt ist. Das Lager 21 ist geteilt ausgebildet. Es besteht aus einem an dem Blechteil 15 befestigten metallischen Tragteil 22, welches zwei beidseitig der Armlehne angeordnete Lagerarme 23 besitzt. Die Lagerarme 23 weisen jeweils eine schlitzförmige, einseitig offene Lagerausnehmung 20 auf. Tragteil 22, und Lagerarme 23 bilden hierbei ein erstes Lagerteil. Die schlitzförmigen Lagerausnehmungen 20 dienen in montierter Stellung der Armlehne 18 zur Aufnahme der beiden Drehachsen 19 derselben. Zu diesem Zweck sind die schlitzförmigen Lagerausnehmungen 20 in den Lagerarmen 23 etwa senkrecht zur Richtung der auf die Armlehne 18 ausgeübten Hauptkräfte gerichtet. Die Lagerarme 23 werden durch die beiden Enden des am Rückenlehnen-Tragelement (Blechteil 15) befestigten Tragteils 22 gebildet, wobei die Lagerarme 23 etwa im rechten Winkel von der Rückenlehnenebene bzw. der Ebene des Tragteils 22 abgebogen sind. Fig. 1 macht deutlich, daß die Lagerarme 23 schräg von hinten/unten nach vorn/oben gerichtet sind und hierbei die schlitzförmigen Lagerausnehmungen 20 schräg von hinten/oben nach vorn/unten verlaufen.

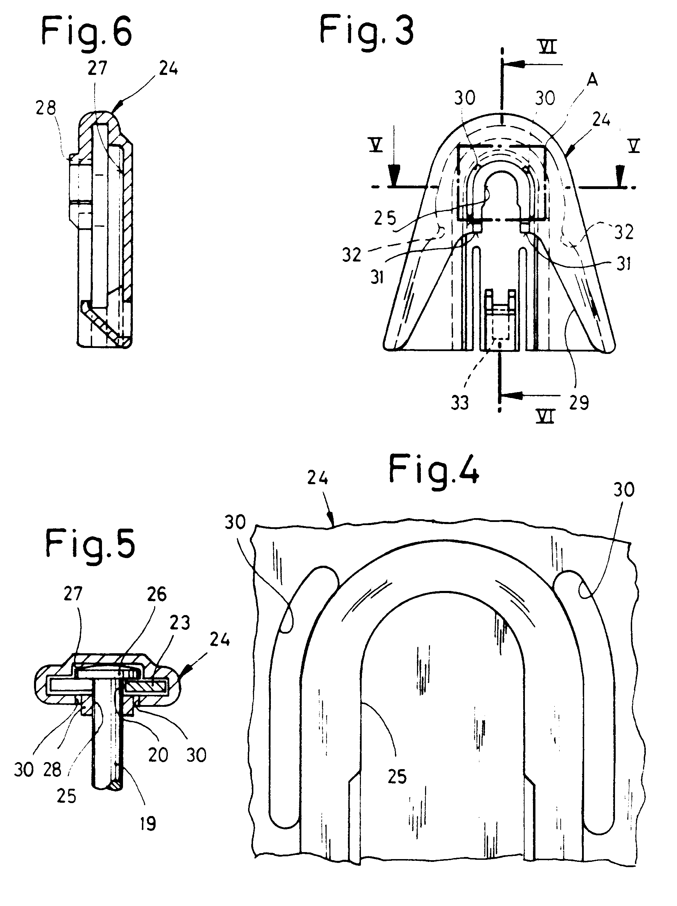

Die schlitzförmigen Lagerausnehmungen 20 sind jeweils durch eine Kunststoffkappe 24 schließbar. Die Kunststoffkappen 24 sind jeweils auf einen der Lagerarme 23 aufschiebbar. Sie bilden damit ein zweites Lagerteil und dienen zugleich als Blenden zur Verkleidung der Lagerstellen 19, 20 der Mittelarmlehne 18. Die Ausgestaltung der das zweite Lagerteil bildenden Kunststoffkappen 24 geht nun im einzelnen aus Fig. 2, insbesondere aber aus Fig. 3-6 hervor. Danach besitzen auch die Kunststoffkappen 24 jeweils eine schlitzförmige Lagerausnehmung, die mit 25 beziffert ist und etwa senkrecht zu der zugeordneten schlitzförmigen Lagerausnehmung 20 des betreffenden Lagerarmes 23 verläuft (vgl. Fig. 1 und 2). Die Kunststoffkappen 24 sind entsprechend den Außenkonturen der Lagerarme 23 flach konisch ausgestaltet. Die in den Kunststoffkappen 24 ausgebildeten schlitzförmigen Lagerausnehmungen 25 erweitern sich in Öffnungsrichtung konisch (vgl. insbes. Fig. 3). Wie Fig. 5 zeigt, besitzen die Drehachsen 19 der Mittelarmlehne 18 jeweils einen leicht ballig ausgebildeten abgesetzten Kopf 26, der die zugeordnete schlitzförmige Lagerausnehmung 20 des Lagerarmes 23 hintergreift. Der Kopf 26 ist hierbei in einer entsprechenden Aussparung 27 der zugeordneten Kunststoffkappe 24 angeordnet und von dieser nach außen hin abgedeckt. Wie insbesondere Fig. 5 und 6 erkennen lassen, weist die Kunststoffkappe 24 - bei 28 -im Bereich ihrer schlitzförmigen Lagerausnehmungen 25 eine derartige Axialerstreckung auf, daß sie auch zur axialen Führung der zugeordneten Drehachse 19 zu dienen vermag. Insgesamt besitzt also die Kunststoffkappe 24 eine der Außenkontur des Lagerarmes 23 entsprechende Innenkontur, derart, daß sie in Montagestellung den Lagerarm allseitig umschließt (vgl. Fig. 2 und 5), wobei - innenseitig - nur die Lagerausnehmung 25, einschließlich konischer Erweiterung 29, ausgespart ist. Die Kunststoffkappe 24 weist nun einige wichtige Merkmale auf, die zum Ausgleich von Toleranzen und für eine spielfreie Lagerung der Drehachsen 19 vorgenommen worden sind. So besitzt die schlitzförmige Lagerausnehmung 25 in der Kunststoffkappe 24 gegenüber dem Durchmesser der Drehachse 19 Untermaß. Gleichzeitig ist das Material der Kunststoffkappe 24 um die Lagerausnehmung 25 herum freigeschnitten (vgl. insbes. Fig. 4). Die beiden Freischnitte sind in Fig. 3 und 4 mit 30 beziffert. Durch das Untermaß der Lagerausnehmung 25, zusammen mit den Freischnitten 30, entsteht vorteilhafterweise eine Federwirkung bei der Lagerung der Drehachse 19 in der Lagerausnehmung 25 der Kunststoffkappe 24.

Des weiteren ist im Innern der Kunststoffkappe 24, etwa im Bereich der mit 31 bezifferten Übergangsstelle der schlitzförmigen Lagerausnehmung 25 in die konische Erweiterung 29 beidseitig ein Buckel 32 angeformt (siehe insbes. Fig. 3). Durch diese vorteilhafte Maßnahme wird in einfacher Weise ein Spielausgleich bei der Passung zwischen Lagerarm 23 und Kunststoffkappe 24 und den dabei entstehenden unvermeidbaren Toleranzen erreicht. Bei der Montage der Kunststoffkappe 24 auf dem zugeordneten Lagerarm 23 werden die buckelartigen Ausformungen 32 der Kunststoffkappe 24 von den angrenzenden konischen Flächen des Lagerarmes 23 federnd zur Seite gedrückt, so daß ein spielfreier Sitz der Kunststoffkappe 24 auf dem Lagerarm 23 gewährleistet ist.

Zum Zwecke der Fixierung der Kunststoffkappe 24 in ihrer Montagestellung auf dem Lagerarm 23 weist die Kunststoffkappe 24 eine federnde Zunge 33 mit einer Rastnase 34 auf, die mit einer entsprechenden Öffnung 35 im Lagerarm 23 (vgl. Fig. 2) verrastbar ist.

Die im vorstehenden beschriebenen besonderen Maßnahmen an der Kunststoffkappe 24 lassen sich in einfacher Weise in einem Arbeitsgang vornehmen, wenn die Kunststoffkappe 24 als Spritzteil ausgebildet ist.

**Patentansprüche**

1. Vorrichtung zur lösbaren Lagerung schwenkbarer Armlehnen von Sitzen, insbesondere Mittelarmlehnen von Kraftfahrzeug-Hintersitzen, wobei an der Armlehne Drehachsen befestigt sind, die beidseitig in ein an der Rückenlehne des Sitzes angeordnetes Lager eingreifen, dadurch gekennzeichnet, daß das Lager (21, 24) geteilt ausgebildet ist, derart, daß es ein an der Rückenlehne (13) befestigtes metallisches Tragteil (22) mit zwei beidseitig der Armlehne (18) angeordneten Lagerarmen (23) besitzt, die schlitzförmige, einseitig offene Lagerausnehmungen (20) aufweisen und ein erstes Lagerteil bilden, und daß die schlitzförmigen Lagerausnehmungen (20) jeweils durch auf die Lagerarme (23) aufschiebbare Kunststoffkappen (24) schließbar sind, welche ein zweites Lagerteil bilden, und daß die Kunststoffkappen (24) zugleich als Blenden zur Verkleidung der Lagerstellen (19, 20) dienen.

2. Vorrichtung nach Anspruch 1, dadurch gekennzeichnet, daß die schlitzförmigen Lagerausnehmungen (20) in den Lagerarmen (23) etwa senkrecht zur Richtung der auf die Armlehne (18) ausgeübten Hauptkräfte gerichtet sind und daß die Kunststoffkappen (24) jeweils ebenfalls eine schlitzförmige Lagerausnehmung (25) aufweisen, die im wesentlichen senkrecht zu den schlitzförmigen Lagerausnehmungen (20) der Lagerarme (23) verläuft.

3. Vorrichtung nach Anspruch 1 oder 2,
dadurch gekennzeichnet, daß die Lagerarme (23) durch die beiden Enden des an einem Rückenlehnentragelement (Blechteil 15) befestigten Tragteils (22) gebildet werden, wobei die Lagerarme (23) etwa im rechten Winkel von der Rückenlehnenebene bzw. der Ebene des Tragteils (22) abgebogen sind.

4. Vorrichtung nach Anspruch 1, 2 oder 3,
dadurch gekennzeichnet, daß die Lagerarme (23) schräg von hinten/unten nach vorn/oben gerichtet sind und daß die schlitzförmigen Lagerausnehmungen (20) schräg von hinten/oben nach vorn/unten verlaufen.

5. Vorrichtung nach einem oder mehreren der vorstehenden Ansprüche,
dadurch gekennzeichnet, daß die Lagerarme (23) und entsprechend auch die Kunststoffkappen (24) flach konisch ausgestaltet sind und daß die an den Kunststoffkappen (24) ausgebildeten schlitzförmigen Lagerausnehmungen (25) sich in Öffnungsrichtung konisch erweitern (29).

6. Vorrichtung nach einem oder mehreren der vorstehenden Ansprüche,
dadurch gekennzeichnet, daß die Drehachse (19) einen leicht ballig ausgebildeten abgesetzten Kopf (26) aufweist, der die schlitzförmige Lagerausnehmung (20) des Lagerarmes (23) hintergreift, und daß der Kopf (26) in einer entsprechenden Aussparung (27) der zugeordneten Kunststoffkappe (24) angeordnet und von dieser nach außen hin abgedeckt ist.

7. Vorrichtung nach einem oder mehreren der vorstehenden Ansprüche,
dadurch gekennzeichnet, daß die Kunststoffkappe (24) im Bereich ihrer schlitzförmigen Lagerausnehmung (25) (bei 28) eine derartige Axialerstreckung aufweist, daß sie auch zur axialen Führung der Drehachse (19) dient.

8. Vorrichtung nach einem oder mehreren der vorstehenden Ansprüche,
dadurch gekennzeichnet, daß die Kunststoffkappe (24) eine der Außenkontur des Lagerarmes (23) entsprechende Innenkontur besitzt, derart, daß sie in Montagestellung den Lagerarm (23) allseitig umschließt, wobei - innenseitig - nur die Lagerausnehmung (25) der Kunststoffkappe (24), einschließlich konischer Erweiterung (29), ausgespart ist.

9. Vorrichtung nach einem oder mehreren der Ansprüche 2-8,
dadurch gekennzeichnet, daß die schlitzförmige Lagerausnehmung (25) der Kunststoffkappe (24) gegenüber dem Durchmesser der Drehachse (19) Untermaß besitzt und daß das Material der Kunststoffkappe (24) um die Lagerausnehmung (25) herum freigeschnitten (30) ist.

10. Vorrichtung nach einem oder mehreren der Ansprüche 5-9,
dadurch gekennzeichnet, daß im Innern der Kunststoffkappe (24), etwa im Bereich der Übergangsstelle (31) der schlitzförmigen Lagerausnehmung (25) in die konische Erweiterung (29) beidseitig ein Buckel (32) angeformt ist.

11. Vorrichtung nach einem oder mehreren der vorstehenden Ansprüche,
dadurch gekennzeichnet, daß die Kunststoffkappe (24) zur lösbaren Fixierung gegenüber dem zugeordneten Lagerarm (23) eine federnde Zunge (33) mit einer Rastnase (34) aufweist, die mit einer Öffnung (35) im Lagerarm (23) verrastbar ist.

12. Vorrichtung nach einem oder mehreren der vorstehenden Ansprüche,
dadurch gekennzeichnet, daß die Kunststoffkappe (24) als Kunststoffspritzteil ausgebildet ist.

**Claims**

1. Device for releasably mounting pivotable arm rests of seats, especially the centre arm rests of motor vehicle rear seats, in which the arm rest has journals which engage at both sides with a bearing arranged in the back rest of the seat,
characterised in that the bearing (21, 24) is split in such a way that it has a metal support part (22), secured to the back rest (13), with two mounting arms (23) arranged on both sides of the arm rest (18), which mounting arms have slot-shaped, bearing recesses (20) open on one side and forming a first baring part, and that the slot-shaped bearing recesses (20) in each case can be closed by sliding onto the bearing arms (23) plastics caps (24) which form a second bearing part, and that the plastics caps (24) at the same time serve as apertures for covering the bearing points (19, 20).

2. Device according to claim 1,

characterised in that the slot-like bearing recesses (20) in the bearing arms (23) are directed approximately perpendicularly to the direction of the main forces exerted on the arm rest (18) and that the plastics caps (24) in each case also have a slot-shaped bearing recess (25) which extends essentially perpendicularly to the slot-shaped bearing recesses (20) of the bearing arms (23).

3. Device according to claim 1 or 2,
characterised in that the bearing arms (23) are formed by the two ends of the support part (22) secured to one of the back rest support elements (sheet metal part 15), in which the bearing arms (23) are bent approximately 90° away from the surface of the back rest or the surface of the support part (22).

4. Device according to claim 1, 2 or 3,
characterised in that the bearing arms (23) are directed at a slope from the bottom/rear to the front/top and that the slot-shaped bearing recesses (20) run at a slope from the top/rear to the front/bottom.

5. Device according to one or more of the preceding claims,
characterised in that the bearing arms (23) and correspondingly also the plastics caps (24) have a flat, conical shape and that the slot-shaped bearing recesses (25) formed on the plastics caps (24) expand conically in the opening direction (29).

6. Device according to one or more of the preceding claims,
characterised in that the journal (19) has a slightly convex-shaped offset head (26) which engages behind the slot-shaped bearing recess (20) of the bearing arm (23), and that the head (26) is arranged in a corresponding recess (27) of the associated plastics cap (24) and is covered by this to the outside.

7. Device according to one or more of the preceding claims,
characterised in that the plastics cap (24) extends axially in the area of its slot-shaped bearing recess (25) (at 28) in such a way that it also serves as the axial guide for the journal (19).

8. Device according to one or more of the preceding claims,
characterised in that the plastics cap (24) has an inner contour corresponding to the outer contour of the bearing arm (23) in such a way that in the assembled position it surrounds the bearing arm (23) on all sides, in which - on the inside - only the bearing recess (25) of the plastics cap (24), including the conical expansion (29), is recessed.

9. Device according to one or more of the claims 2-8,
characterised in that the slot-shaped bearing recess (25) of the plastics cap (24) is smaller than the diameter of the journal (19) and that the material of the plastics cap (24) is cut free (30) around the bearing recess (25).

10. Device according to one or more of the claims 5-9,
characterised in that inside the plastics cap (24) approximately in the area of the transition point (31) where the slot-shaped bearing recess (25) becomes the conical expansion (29), on both sides there is provided a hump (32).

11. Device according to one or more of the preceding claims,
characterised in that for releasably fixing opposite the associated bearing arm (23) the plastics cap (24) has a resilient tongue (33) with a catch (34) which can engage with an opening (35) in the bearing arm (23).

12. Device according to one or more of the preceding claims,
characterised in that the plastics cap (24) is formed as a plastics injection moulded part.

**Revendications**

1. Dispositif pour le montage avec possibilité de démontage d'accoudoirs articulés de sièges, en particulier d'accoudoirs centraux de sièges arrières de véhicules automobiles, des axes d'articulation qui s'engagent dans un palier-support disposé sur le dossier, de part et d'autre de l'accoudoir, étant fixés sur l'accoudoir, caractérisé en ce que le palier-support (21, 24) est réalisé en plusieurs parties de manière telle qu'il comporte un élément-support (22) métallique fixé sur le dossier (13) avec deux bras-supports (23) qui sont disposés de part et d'autre de l'accoudoir (18) et qui présentent des logements de palier (20) ouverts d'un côté, en forme de rainures et forment un premier élément de palier, et en ce que les logements de palier (20) en forme de rainure sont fermés par des coiffes en matière plastique (24) qui s'enfilent sur les bras-supports (23) et forment un deuxième élément de palier, et en ce que les coiffes en matière plastique (24) servent simultanément de caches pour l'habillage des paliers (19, 20).

2. Dispositif selon la revendication 1, caractérisé en ce que les logements de palier (20) en forme de rainure des bras-supports (23) sont orientés sensiblement perpendiculairement à la direction des forces principales agissant sur l'accoudoir (18) et en ce que les coiffes en matière plastique (24) présentent aussi chacune un logement de palier (25) en forme de rainure qui s'étend essentiellement perpendiculairement aux logements de palier (20) en forme de rainure des bras-supports (23).

3. Dispositif selon la revendication 1 ou 2, caractérisé en ce que les bras-supports (23) sont formés par les deux extrémités de l'élément-support (22) fixé sur l'élément porteur du dossier (élément en tôle 15), les bras-supports (23) étant pliés sensiblement à angle droit à partir du plan du dossier ou du plan de l'élément support (22).

4. Dispositif selon la revendication 1, 2 ou 3, caractérisé en ce que les bras-supports (23) sont inclinés de l'arrière/bas vers l'avant/haut et en ce que les logements de palier (20) en forme de rainure sont inclinés de l'arrière/haut vers l'avant/bas.

5. Dispositif selon une ou plusieurs des revendications précédentes, caractérisé en ce que les bras-supports (23) et par conséquent les coiffes en matière plastique (24) ont une forme aplatie conique, et en ce que les logements de palier (25) en forme de rainure des coiffes en matière plastique (24) s'élargissent en cône (29) en direction de l'ouverture.

6. Dispositif selon une ou plusieurs des revendications précédentes, caractérisé en ce que l'axe de rotation (19) présente une tête (26) à épaulement légèrement bombée qui s'engage derrière le logement de palier (20) en forme de rainure du bras-support (23), et en ce que la tête (26) est située dans un évidement (27) correspondant de la coiffe en matière plastique (24) associée et est masquée par celle-ci vers l'extérieur.

7. Dispositif selon une ou plusieurs des revendications précédentes, caractérisé en ce que la coiffe en matière plastique (24) a, dans la zone de son logement de palier (25) en forme de rainure (en 28), une dimension axiale telle qu'elle sert également au guidage axial de l'axe de rotation (19).

8. Dispositif selon une ou plusieurs des revendications précédentes, caractérisé en ce que la coiffe en matière plastique (24) a une forme intérieure adaptée à la forme extérieure du bras-support (23) de manière telle qu'en position montée, elle entoure de tous côtés le bras-support (23), seul le logement de palier (25) de la coiffe en matière plastique (24), y compris l'élargissement conique (29) étant évidé côté intérieur.

9. Dispositif selon une ou plusieurs des revendications 2 à 8, caractérisé en ce que le logement de palier (25) en forme de rainure de la coiffe en matière plastique (24) a une cote inférieure au diamètre de l'axe de rotation (19) et en ce que le matériau de la coiffe en matière plastique (24) est dégagé (30) autour du logement de palier (25).

10. Dispositif selon une ou plusieurs des revendications 5 à 9, caractérisé en ce qu'un bossage (32) est formé à l'intérieur de la coiffe en matière plastique (24) sensiblement dans la zone de transition (31) entre le logement de palier (25) en forme de rainure et l'élargissement conique (29).

11. Dispositif selon une ou plusieurs des revendications précédentes, caractérisé en ce que la coiffe en matière plastique (24) présente, pour sa fixation avec possibilité de démontage sur le bras-support (23) concerné, une languette (33) élastique munie d'un ergot (34) qui s'engage par encliquetage dans une ouverture (35) dans le bras-support (23).

12. Dispositif selon une ou plusieurs des revendications précédentes, caractérisé en ce que la coiffe en matière plastique (24) est réalisée sous forme d'élément en matière plastique moulé par injection.

Fig.1

Fig.2

# Fig.6

# Fig.3

# Fig.5

# Fig.4